# EUROPEAN PATENT SPECIFICATION

(11) **EP 0 857 167 B1**
(45) Date of publication and mention of the grant of the patent: **03.01.2001**
(21) Application number: 96937590.6
(22) Date of filing: 18.10.1996
(51) Int. Cl.: C05C 5/02

(54) **METHOD FOR MAKING NITROGEN-POTASSIUM FERTILIZER CONTAINING CALCIUM NITRATE AND PRODUCTS THEREOF**
VERFAHREN ZUR HERSTELLUNG VON KALZIUMNITRAT ENTHALTENDEN STICKSTOFF-KALIUM-DÜNGEMITTELN SOWIE DARAUS HERGESTELLTE PRODUKTE
PROCEDE DE FABRICATION D'ENGRAIS DE POTASSIUM ET D'AZOTE CONTENANT DU NITRATE DE CALCIUM ET PRODUITS AINSI FABRIQUES

(30) Priority: 27.10.1995 NO 954336
(43) Date of publication of application: 12.08.1998
(73) Proprietor: NORSK HYDRO ASA, 0240 Oslo (NO)
(72) Inventor: OBRESTAD, Torstein, N-3745 Ulefoss (NO); ISAKSEN, Jan, Birger, N-3931 Porsgrunn (NO); MOLAND, Lars, Gustav, N-3926 Porsgrunn (NO)
(74) Representative: Bleukx, Luc
(86) International application number: PCT/NO96/00244
(87) International publication number: WO 97/15536

(56) References cited:
- FR-A- 861 676
- FR-A- 1 279 695
- GB-A- 392 531

## Description

The present invention relates to a method for preparation of nitrate and potassium containing fertilizers (NK-fertilizers) in particulated form. The invention further comprises products of such NK-fertilizers.

NK-fertilizers can be made by blending N-fertilizers with K-fertilizers, but there has been a need for having at least some homogeneous formulations of NK-fertilizers. The N-source can be urea or a nitrate fertilizer such as ammonium nitrate or calcium nitrate (CN) and the potassium source can be a K-fertilizer like KNO₃ (KN), KCI, or K₂SO₄. However, particulation, both with regard to prilling and granulation, has proved to cause great problems. Thus it has been experienced that when CN and KNO₃ have been melted together, substantial undercooling caused severe problems for the particulation step. A NK-fertilizer based on CN and KNO₃ was considered to be most interesting as it could be expected to possess all the advantages of a CN-fertilizer and in addition contain water-soluble potassium from a nitrate source.

From Japanese application JP 95005421 B2 it is known a granular NK-fertilizer made from an eutectic material consisting of 90-50 weight% urea and 10-50 weight% potash (potassium carbonate). The granular product is made by spraying through a small hole the eutectic solution on raw material which is fed into a kneader and then mixed and melted. For equalizing the elution speed of the nitrogen and the potash, the granules are covered with a coating material having polypropylene resin as a major component. This is a most complicated process. Such a fertilizer will have a large part of its nitrogen as NH₄-N and corresponding loss of this nitrogen. The reason for this is of course that urea constitutes the only N-source of the fertilizer. Further, there will be no water-soluble calcium as will be the case when CN and KNO₃ are the N-sources.

Addition of a potassium source to a nitrogen-potassium fertilizer is known from US-Patent No. 3,617,235 which comprises spraying melts or suspensions with a low water content and containing the plant nutrients nitrogen and phosphorous. Solid potassium salt is added before spraying or prilling said melt or suspension. However, this process requires that solids added are graded so that more than 7 weight% has a grain size exceeding 0.1 mm. Though this process functions excellently for NPK-fertilizer, this principle has not been found to be useful for particulating NK-fertilizers, mainly due to the undercooling problems and that the required particle size for the solids is not available in the market.

The main object of the invention was to arrive at a new method for particulating NK-melts or solutions into homogeneous NK-fertilizers.

Another object was to arrive at a method for making NK-fertilizers based on calcium nitrate fertilizers and potassium nitrate.

A further object was to develop a method for making NK-fertilizers which in addition also contained other nutrients like magnesium nitrate.

It was also an object to arrive at homogeneous NK-fertilizers which could be applied alone or as blending components either for special NK-formulations or NPK-fertilizer blends.

Due to the disadvantages related to known NK-fertilizers, it was decided to investigate further the possibilities of applying CN and KNO₃ as basic raw materials for the new fertilizer. Throughout this description the abbreviation CN is meant to cover both pure calcium nitrate and the calcium nitrate product obtained from a nitrophosphate process. This product is often called Norsk Hydro Calcium Nitrate abbreviated NH-CN and has the following composition: 79 weight% calcium nitrate, 6 weight% ammonium nitrate and 15 weight% water. Several ways of making the desired NK-fertilizer formulations were evaluated. Thus compactation of prilled CN and crystalline KNO₃ and blending of available prilled CN and prilled KNO₃ were tested. Compactation was found to be expensive and gave a product with rather high dust content. Blending is first of all dependent on having similar particles with regard to particle size and particle size distribution for the two raw materials in question. Secondly, a homogeneous product will not be obtained.

Though undercooling was considered to be a problem, the inventors decided to investigate further making homogeneous NK-fertilizer from melts of at least one of the components and possibly add the other component as solids to the melt. Solid KNO₃ was dissolved in melted CN, but initial tests showed that then the undercooling was so severe that prilling/granulation would be impossible. Series of experiments were conducted adding solid KNO₃, having various particle size, to melted CN at about 100°C. The particle size of the solids was varied between 0.2-1.6 mm. The question was whether the mixture could solidify before the KNO₃ particles dissolved in the CN melt and thereby resulted in undercooling of the melt. During these experiments the ratios between CN and KNO₃ were also varied. The following two formulations were especially tested: 70 weight% CN and 30 weight% KNO₃, corresponding to the NPK-formulation (defined as N-P₂O₅-K₂O) 15-0-14, and 85 weight% CN and 15 weight% KNO₃, corresponding to the formulation 15-0-7. However, during all these experiments some undercooling was experienced. If the particle size of the solids <0.3 mm, the undercooling was substantial. To avoid undercooling the particle size of the solids should be larger than 1mm. But KNO₃ having this particle size is not available on the market and in addition such large particles would cause problems during prilling. Though it migth be possible to obtain particulated homogeneous NK-fertilizers with this method, it was not considered to be the ultimate solution to the problem and further investigations of this method were terminated.

Then it was decided to perform a thorough investigation of the various phases for CN-water-KNO₃. During these investigations it was surprisingly found that there was indeed an area where undercooliing would not cause substantial problems. Accordingly, it should be possible to perform particulation by applying traditional methods and equipment. This area can be defined as follows:

| | |
|---|---|
| Ca(NO₃)₂ | 40-14 weigth% |
| KNO₃ | 55-85 weigth% |
| Water | 0.5-6 weigth% |

It was further found that to such NK-melts/solutions MgNO₃ could be added in amounts of 0-5 weigth%. The fertilizer mixture to be particulated could also contain 0-4 weigth% ammonium nitrate (AN).

In view of these findings particulation of melts/solutions within the above ranges were per- formed. Successful prilling could be carried out at temperatures of 160-190°C and granulation could be conducted at temperatures of 90-140°C. Thus it was obtained homogeneous NK-fertilizer products having particle size of 1-5mm and within desired size distribution. The products were of nice sherical shape and the particles had a hardness or crushing strength of about 2-13kg, depending on water content and size.

The scope of the invention and its special features are as defined by the attached claims.

The invention will now be further explained in connection with the description of the figures and examples.

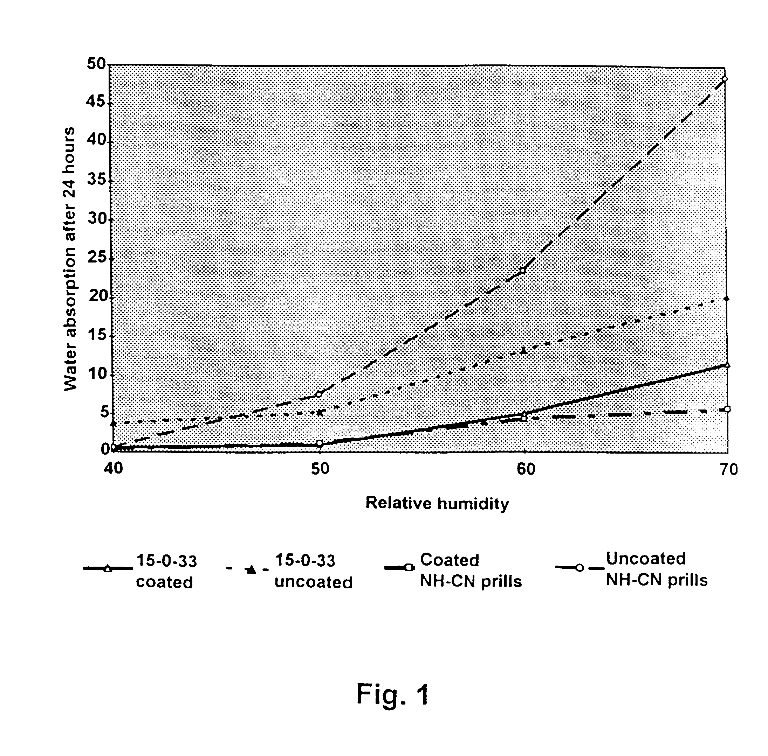

- Figure 1: shows water absorption of NK-fertilizers according to the invention compared with corresponding results for NH-CN.

### Example 1

This example shows prilling of NK 15-0-35.

75 weight% solid KN was mixed with 25 weight% NH-CN and heated to about 100°C, at which temperature melting of the mixture started. Water content and viscosity were adjusted to desired values, whereupon the homogeneous melt was transferred to a prilling device and prilling was performed at about 165°C into an oil bath. Nice, white and hard particles were obtained. The particle strength of 3-4 mm particles was found to be in the range 8-13 kg.

### Example 2

This example shows prilling of NK 15-0-33.

70 weight% crystalline KN was mixed with 30 weight% NH-CN and melted at about 100°C, and subsequently the water content and viscosity were adjusted to desired values and the homogeneous melt was prilled at about 165°C. The product qualities of the prilled particles were similar to that obtained in Example 1.

### Example 3

This example shows prilling of NK 15-0-29.

60 weight% KN and 40 weight% NH-CN were mixed and melted at about 100°C and this melt had then the following composition:

60 weight% KN, 31.5 weight% CN, 2.5 weight% AN and 6 weight% water.

The water content was then reduced to about 3 weight% and the temperature increased to about 165°C, whereupon the homogeneous melt was subjected to prilling.

The particle strength of fresh product (3-4 mm) was measured to 5 kg and for particles aged for 30 minutes to 9 kg.

### Example 4

This examples shows full-scale prilling of NK 15-0-33.

During these experiments melts made from 30 weight% granulated NH-CN and 70 weight% crystalline KN were used. In order to increase the particle strength of the finished product the water content of the melt was reduced from 4.5 weight% to 2.5 weight% by evaporation. Prilling was performed in a prilling tower of 23 m and at outdoor temperatures of 28°C The prilling temperature during these experiments was varied between 160-190°C.

It was found that products with sufficient solidifying properties could be obtained for this NK-formulation even when the water content prior to prilling was as high as 4.5 weight%.

### Example 5

This example shows granulation of NK 15-0-33.

The granulation was performed by supplying fine dust of NK 15-0-33 fertilizer to a granulation to which melt of the same product was supplied. The granulation temperature was varied between 115-125°C, and it was found that granular products having desired size and crushing strength could be obtained. The most preferred granulation temperature was found to be in the range 120-125°C. Further tests showed that granulation of NK-fertilizers could be performed at 90-140°C, depending on the NK-formulations to be produced and the water content of the melt.

### Example 6

This example relates to making NK 15-0-14 by blending homogeneous NK-fertilizers according to the invention with other fertilizers like NH-CN.

42 weight% homogeneous NK 15-0-33 made according to the above Example 4 and having a density of 1.97-1.98 kg/litre and average diameter d50=1.78 mm was mixed mechanically with 58 weight% NH-CN having a density of 1.96.-1.98 kg/litre and d50 1.78 mm. These two types of products had about equal shape and particle size distribution. The resulting blend had the formulation 15-0-14 and had a uniform appearance and the particles did not segregate.

By applying the above procedure it will be possible to make all grades from NK 15-0-33 down to NK 15-0-0. The fertilizer component which is added to the homogeneous NK-fertilizer according to the invention, does not have to be CN or NH-CN, but can be any suitable fertilizer for arriving at the desired NK-fertilizer formulation of the blend. The same requirements with regard to particle size, distribution, particle shape and density will of course also apply for such blends.

The new homogeneous NK-fertilizer products were further tested with regard to caking properties and water absorption. These properties were compared with the same for prilled NH-CN. The coating used during the test was a coating based on oil, wax and resin, described in the International Patent Application PCT/N095/00109. The results are shown in Table I.

**Table I**

| NK 15-0-33 (2.5% water, prilled) | | NH-CN (prilled) | |
|---|---|---|---|
| 0.2% coating | Uncoated | 0.2% coating | Uncoated |
| Caking No.: 340 | Caking No.: 1050 | Caking No.: 590 | Caking No. 1080 |

From the above Table I it can be seen that conditioned NK-fertilizer will have somewhat better caking properties than prilled NH-CN.

Water absorption for homogeneous NK-15-0-33 according to the invention was investigated for both coated and uncoated particles. The results were compared for those of prilled NH-CN. The tests were performed at 25°C and 40, 50, 60 and 70% relative humidity (RH), respectively. The results of these tests are shown in the graphs of Figure 1. From these it can be seen that uncoated NK 15-0-33 should not be exposed to high humidities for an extended time. However, if this fertilizer is coated by about 0.2 weight% of a suitable coating the water absorption will be acceptably low.

A new method of making homogeneous NK-fertilizers has been achieved by the present invention. The new NK-products can be applied as such or blended with other suitable fertilizers to make fertilizer blends with the desired formulations. The new homogeneous NK-products have excellent properties both with regard to nutrient value and storage and handling properties.

## Claims

1. Method for making NK-fertilizers basically from calcium nitrate fertilizers and potassium nitrate, and where the calcium nitrate fertilizer is melted together with potassium nitrate,
**characterized in that**
the calcium nitrate fertilizer and potassium nitrate are melted at 90-120°C to form a melt or suspension thereof and then heated to the desired particulation temperature and particulated to form a homogeneous NK-fertilizer.

2. A method according to claim 1,
**characterized in that**
the components are mixed in ratios giving a melt or suspension comprising 40-14 weight% calcium nitrate, 55-85 weight% potassium nitrate, 0.5-6 weight% water, 0-4 weight% ammonium nitrate and 0-5 weight% magnesium nitrate.

3. A method according to claim 1,
**characterized in that**
the particulation is performed by prilling at temperatures of 160-190°C.

4. A method according to claim 1,
**characterized in that**
the particulation is performed by granulation of a melt or suspension containing 10-2.5 weight% water at a granulation temperature of 90-140°C.

5. A method according to claim 1,
**characterized in that**
about 60 weight% potassium nitrate and about 40 weight% of a calcium nitrate fertilizer were melted at about 100°C forming a melt containing about 60 weight% KNO₃, about 31.5 weight% Ca(NO₃)₂, about 2.5 weight% NH₄NO₃ and about 6 weight% water, and that this melt was evaporated till the water content was reduced to about 3 weight% and then subjected to prilling at 160-170°C.

6. A method according to claim 1,
**characterized in that**
about 30 weight% granulated calcium nitrate fertilizer and about 70 weight% crystalline potassium nitrate were melted at about 100°C and the thereby formed melt then was evaporated till its water content was reduced from 4.5 weight% to 2.5 weight% subsequent to prilling at 165-175°C.

7. A method according to claim 1,
**characterized in that**
fine grain particles from a NK 15-0-33 fertilizer were supplied to a granulator together with a liquid of the same fertilizer and granulated at 120-125°C.

8. Homogeneous NK-fertilizer comprising 40-14 weight% Ca(NO₃)₂, 55-85 weight% KNO₃, 0.5-6 weight% water, 0-4 weight% NH₄NO₃ and 0-5 weight% Mg(NO₃)₂.

9. Homogeneous NK-fertilizer according to claim 8,
**characterized in that**
the fertilizer is a prilled product with the NK-formulations 15-0-35 to 15-0-28 having a crushing strength of 2-9 kg.

## Patentansprüche

1. Verfahren zum Herstellen von NK-Düngemitteln, aus grundsätzlich Kalziumnitratdüngemitteln und Kaliumnitrat, Verfahren bei dem das Kalziumnitratdüngemittel zusammen mit dem Kaliumnitrat geschmolzen wird,
dadurch gekennzeichnet, dass das Kalziumnitratdüngemittel und das Kaliumnitrat bei 90-120°C geschmolzen werden, um eine Schmelze oder eine Suspension derselben zu bilden, und dann auf die gewünschte Temperatur für die Partikelbildung erwärmt werden und zu Partikeln geformt werden, um ein homogenes NK-Düngemittel zu bilden.

2. Verfahren gemäß Anspruch 1,
dadurch gekennzeichnet, dass die Komponenten in solchen Verhältnissen gemischt werden, dass sich eine Schmelze oder eine Suspension ergibt, welche folgende Zusammensetzung besitzt: 40-14 Gew.% Kalziumnitrat, 55-85 Gew.% Kaliumnitrat, 0,5-6 Gew.% Wasser, 0-4 Gew.% Ammoniumnitrat und 0-5 Gew.% Magnesiumnitrat.

3. Verfahren gemäß Anspruch 1,
dadurch gekennzeichnet, dass die Partikelbildung mit Hilfe einer Sprühkristallisation bei Temperaturen von 160-190°C durchgeführt wird.

4. Verfahren gemäß Anspruch 1,
dadurch gekennzeichnet, dass die Partikelbildung durchgeführt wird mit Hilfe einer Granulierung einer Schmelze oder einer Suspension, die 10-2,5 Gew.% Wasser enthält, bei einer Granulierungstemperatur von 90-140°C.

5. Verfahren gemäß Anspruch 1,
dadurch gekennzeichnet, dass etwa 60 Gew.% Kaliumnitrat und etwa 40 Gew.% eines Kalziumnitratdüngemittels bei etwa 100°C geschmolzen werden und eine Schmelze bilden, die etwa 60 Gew.% KNO₃, etwa 31,5 Gew.% Ca(NO₃)₂, etwa 2,5 Gew.% NH₄NO₃ und etwa 6 Gew.% Wasser enthält, und dass diese Schmelze eingedampft wird bis der Wassergehalt auf etwa 3 Gew.% vermindert worden ist um anschließend der Sprühkristallisation bei 160-170°C unterworfen zu werden.

6. Verfahren gemäß Anspruch 1,
dadurch gekennzeichnet, dass etwa 30 Gew.% körniges Kalziumnitratdüngemittel und etwa 70 Gew.% kristallines Kaliumnitrat bei etwa 100°C geschmolzen werden und die dadurch gebildete Schmelze anschließend eingedampft wird bis ihr Wassergehalt von 4,5 Gew.% auf 2,5 Gew.% vermindert worden ist, um anschließend bei 165-175°C einer Sprühkristallisation unterzogen zu werden.

7. Verfahren gemäß Anspruch 1,
dadurch gekennzeichnet, dass feinkörnige Partikel eines NK-15-0-33 Düngemittels in einen Granulator eingespeist werden, zusammen mit einer Flüssigkeit desselben Düngemittels, und bei 120-125°C granuliert werden.

8. Homogenes NK-Düngemittel, welches 40-14 Gew.% Ca(NO₃)₂, 55-85 Gew.% KNO₃, 0,5-6 Gew.% Wasser, 0-4 Gew.% NH₄NO₃ und 0-5 Gew.% Mg(NO₃)₂ enthält.

9. Homogenes NK-Düngemittel gemäß Anspruch 8,
dadurch gekennzeichnet, dass das Düngemittel ein der Sprühkristallisation unterzogenes Produkt mit der NK-Formulierung 15-0-35 bis 15-0-28 ist, welches eine Druckfestigkeit von 2-9 kg besitzt.

## Revendications

1. Procédé pour fabriquer des engrais NK fondamentalement à partir d'engrais à base de nitrate de calcium et de nitrate de potassium, procédé dans lequel l'engrais à base de nitrate de calcium est fondu ensemble avec le nitrate de potassium,
caractérisé en ce que l'engrais à base de nitrate de calcium et le nitrate de potassium sont fondus à 90-120°C pour former un bain de fusion ou une suspension de ceux-ci et sont ensuite chauffés à la température désirée pour la réduction sous forme de particules et soumis à la réduction sous forme de particules pour former un engrais NK homogène.

2. Procédé suivant la revendication 1,
caractérisé en ce que les composants sont mélangés dans des rapports donnant un bain de fusion ou une suspension comprenant 40-14 % en poids de nitrate de calcium, 55-85 % en poids de nitrate de potassium, 0,5-6 % en poids d'eau, 0-4 % en poids de nitrate d'ammonium et 0-5 % en poids de nitrate de magnésium.

3. Procédé suivant la revendication 1,
caractérisé en ce que la réduction sous forme de particules est effectuée par grelonage à des températures de 160-190°C.

4. Procédé suivant la revendication 1,
caractérisé en ce que la réduction sous forme de particules est effectuée par granulation d'un bain de fusion ou d'une suspension contenant 10-2,5 % en poids d'eau à une température de granulation de 90-140°C.

5. Procédé suivant la revendication 1,
caractérisé en ce que environ 60 % en poids de nitrate de potassium et environ 40 % en poids d'un engrais à base de nitrate de calcium sont fondus à environ 100°C formant un bain de fusion contenant environ 60 % en poids de KNO₃, environ 31,5 % en poids de Ca(NO₃)₂, environ 2,5 % en poids de NH₄NO₃ et environ 6 % en poids d'eau et en ce que ce bain de fusion est évaporé jusqu'à ce que la teneur en eau ait été réduite à environ 3 % en poids et est ensuite soumis à un grelonage à 160-170°C.

6. Procédé suivant la revendication 1,
caractérisé en ce que environ 30 % en poids d'un engrais à base de nitrate de calcium granulé et environ 70 % en poids de nitrate de potassium cristallin sont fondus à environ 100°C et le bain de fusion ainsi formé est ensuite évaporé jusqu'à ce que sa teneur en eau ait été réduite de 4,5 % en poids à 2,5 % en poids à la suite d'un grelonage à 165-175°C.

7. Procédé suivant la revendication 1,
caractérisé en ce que des particules à grains fins issues d'un engrais NK 15-0-33 ont été introduites dans un granulateur accompagnées d'un liquide du même engrais et granulées à 120-125°C.

8. Engrais NK homogène comprenant 40-14 % en poids de Ca(NO₃)₂, 55-85 % en poids de KNO₃, 0,5-6 % en poids d'eau, 0-4 % en poids de NH₄NO₃ et 0-5 % en poids de Mg(NO₃)₂.

9. Engrais NK homogène suivant la revendication 8,
caractérisé en ce que l'engrais est un produit greloné avec des formulations NK variant de 15-0-35 à 15-0-28 présentant une résistance à l'écrasement de 2-9 kg.
